# EUROPEAN PATENT APPLICATION

(11) **EP 1 623 962 A1**
(43) Date of publication of application: **08.02.2006**
(21) Application number: 05107145.4
(22) Date of filing: 02.08.2005
(51) Int. Cl.: C03B 33/02

(54) **Method of cutting and parting vertical sheets, and vertical apparatus implementing such method**

(30) Priority: 03.08.2004 IT TO20040551
(71) Applicant: BOTTERO S.p.A., 12010 Cuneo (IT)
(72) Inventor: GHINAMO, Paolo, 12012, BOVES (IT); BERTOLINO, Valerio, 12040, MOROZZO (IT)
(74) Representative: Jorio, Paolo

(57) **Abstract**

A method and system (1) for vertically cutting and parting sheets (2) of glass, whereby a work sheet (2), positioned on edge on a substantially horizontal bottom supporting surface (P), is scored and parted at a cut station (12) to form a sheet portion (19) (20) ; the sheet portion being rotated 90° onto one edge about a fixed hinge axis (F) at the cut station (12), and resting constantly and directly on the supporting surface (P) until at least one further cutting and parting operation is completed.

## Description

The present invention relates to a method of vertically cutting and parting sheets of glass.

To cut and part sheets of laminated or nonshattering glass - to which the following description refers purely by way of example - so-called "vertical" systems are used, in which the work sheet is first cut and then parted, with the sheet maintained substantially on edge at all times. For this purpose, known vertical systems comprise a horizontal supporting surface, along which the sheets are fed on edge; a cut-and-part unit; and a rotation unit located downstream from the cut-and-part unit. As the sheet is fed through the cut-and-part unit, a first straight vertical cut is made and the sheet then parted to form a sheet portion. The sheet portion is then engaged by the rotation unit and rotated 90° about a horizontal axis to rest on one edge; at which point it is again cut and parted to form two or more sheet articles.

Though widely used, the above cutting and parting method is unsatisfactory, especially as regards rotation of the sheet portions. That is, to rotate it, the sheet portion is removed off the supporting surface, normally by means of grippers, and placed on a rotary L-shaped member of the rotation unit; and the rotary member is then rotated about a horizontal axis to set the sheet portion in a horizontal position, in which the sheet portion is unloaded off the rotary member and cut. Removing the sheet portion off the supporting surface, operating the rotary member, and replacing the rotated sheet portion back onto the supporting surface are awkward operations to perform, especially when dealing with extremely large and/or heavy or thin sheet portions.

Rotating the sheet portion also calls for dedicated, and therefore relatively complex, high-cost, actuating assemblies capable of rotating the L-shaped member smoothly, especially when lowering and bringing the sheet portion to rest on one edge, i.e. when the weight of the glass exerts considerable torque on the actuating assembly and any sharp movements could result in breakage of the sheet portion.

At any rate, known rotation units require considerable space longitudinally, i.e. in the travelling direction of the sheets, by having to be located at a distance from the cut-and-part unit, also on account of the rotary L-shaped member.

It is an object of the present invention to provide a method of cutting and parting sheets of glass, designed to provide a straightforward, low-cost solution to the above problems.

It is a further object of the present invention to provide a vertical system for cutting and parting sheets of glass, which is cheap and easy to produce and highly efficient and reliable.

According to the present invention, there is provided a method of cutting and parting sheets of glass, the method comprising the operations of feeding a work sheet into a cut-and-part station; setting the work sheet in a substantially vertical position on a horizontal supporting surface; cutting and parting said work sheet using cutting and parting means at said station to form at least one sheet portion positioned on edge; rotating the sheet portion about a horizontal axis into a rest position, in which the sheet portion rests on one edge on said supporting surface; and cutting and parting the sheet portion to form at least one flat article; characterized in that rotation of said sheet portion about said horizontal axis is performed at said cut-and-part station.

In the method defined above, rotation of said sheet portion about said horizontal axis is preferably performed maintaining the sheet portion constantly and directly in contact with said supporting surface.

The present invention also relates to a vertical system for cutting and parting sheets of glass.

According to the present invention, there is provided a vertical system for cutting and parting sheets of glass, the system comprising a cut-and-part station; a horizontal supporting surface for supporting a work sheet in a substantially vertical or on-edge position at said cut-and-part station; cutting and parting means located at said cut-and-part station to form at least one sheet portion positioned on edge on said supporting surface; and actuating means for rotating the sheet portion about a horizontal axis into a rest position, in which the sheet portion rests on one edge on said supporting surface and can be cut and parted further to form at least one flat article; characterized in that said actuating means are housed in said cut-and-part station.

A non-limiting embodiment of the invention will be described by way of example with reference to the accompanying drawings, in which:
Figure 1 shows a schematic side view of a preferred embodiment of a vertical system for cutting and parting sheets of glass in accordance with the teachings of the present invention;
Figure 2 shows a smaller-scale section along line II-II in Figure 1;
Figures 3 and 4 show side views of two variations of a detail in Figure 1;
Figure 5 shows, schematically, a variation of a further detail in Figure 1.

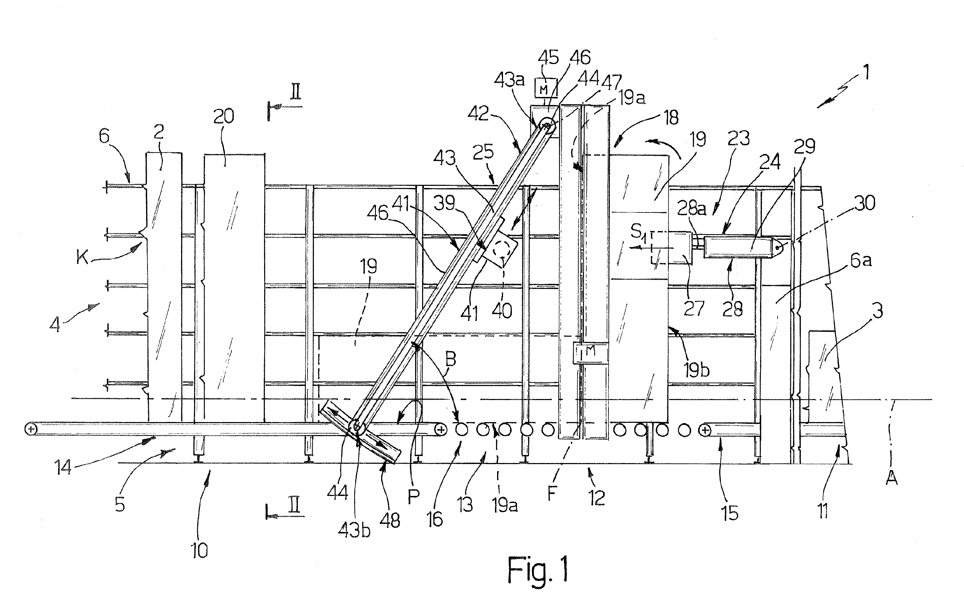

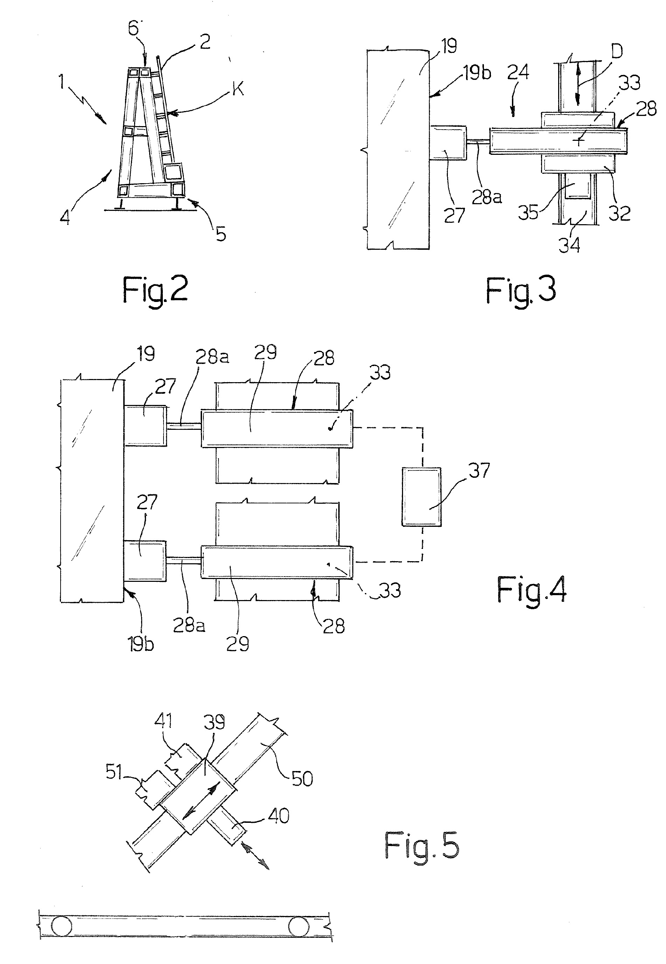

Number 1 in Figure 1 indicates as a whole a vertical system for cutting and parting sheets 2 of glass and producing flat, quadrangular articles 3. In the example described, system 1 is equipped to cut and part laminated sheets of glass, i.e. comprising two lateral sheets of glass and an intermediate sheet of synthetic material, and comprises an elongated frame 4 (Figures 1 and 2) extending in a straight direction A in which sheets 2 are fed during the cutting and parting operations. Frame 4 in turn comprises a base 5; and an inclined lateral wall 6 (Figure 2) extending upwards from base 5 and fitted with a number of known rolling bodies (not shown) defining an inclined lateral supporting surface K for sheets 2. Two end stations 10 and 11 - respectively for loading the work sheets 2 and unloading the resulting flat articles 3 - and one intermediate station 12 - for cutting and parting sheets 2 fed through - are formed on frame 4 in direction A.

A powered supporting and conveying unit 13 extends between stations 10 and 11, close to base 5, and comprises an input belt conveyor 14 and an output belt conveyor 15 located on opposite axial sides of intermediate station 12 and parallel to direction A; and a powered intermediate roller table 16 extending through intermediate station 12 and also parallel to direction A. Conveyors 14 and 15 and roller table 16 define a horizontal surface P for supporting and feeding the sheets through intermediate station 12 and through a cut-and-part unit 18 at intermediate station 12. Unit 18, which is known and therefore not described in detail, provides for successively making a straight vertical cut, perpendicular to direction A, in sheet 2, and for parting sheet 2 along the straight cut to form two sheet portions indicated 19 and 20 in Figure 1.

Once the sheet is parted, sheet portion 20 is backed up away from intermediate station 12, while sheet portion 19 is rotated anticlockwise in Figure 1 and positioned with one edge 19a resting on supporting surface P, as shown by the dash line in Figure 1.

Sheet portion 19 is rotated at station 12 by means of a rotation unit 23 located at station 12 and comprising a push device 24 located downstream from cut-and-part unit 18 in the travelling direction of the sheets/sheet portions; and a lateral supporting device 25 located upstream from cut-and-part unit 18 to accompany sheet portion 19 as it is lowered onto supporting surface P.

As shown in Figure 1, push device 24 comprises a push head 27 which rests against a lateral edge 19b of sheet portion 19 opposite edge 19a, and is connected integrally or hinged to the movable member 28a of a linear, conveniently pneumatic or hydraulic or electric actuator 28, the casing or frame 29 of which is hinged to a fixed post 6a, facing and integral with lateral wall 6, to rotate about a fixed hinge axis 30 parallel to supporting surface P.

In the Figure 3 variation, casing 29 is hinged to a supporting slide 32 to rotate about a movable hinge axis 33. Slide 32 is fitted to a vertical guide 34, connected integrally to post 6a facing and integral with wall 6, to slide up and down in a direction D perpendicular to direction A to adjust the height of linear actuator 28 with respect to supporting surface P. In the example described, slide 32 is powered by an electric motor 35. Alternatively, slide 32 is activated in known manner by a linear actuator controlled by a central control unit for emitting a set signal as a function of the size and type of sheet portion 19 for rotation.

In an alternative embodiment, the position of slide 32 along guide 34 is adjustable manually.

In a further variation shown in Figure 4, push device 24 comprises a number of push heads 27 fitted to respective linear actuators 28 and spaced apart in direction D; and linear actuators 28 are connected to a control unit 37 for selectively controlling actuators 28 as a function of the size and type of sheet portion 19 for rotation. Alternatively, either of actuators 28 is selected manually by the operator.

As shown in Figure 1, lateral supporting device 25 comprises a movable supporting head 39 having a supporting pin 40 for edge 19a of sheet portion 19. Pin 40 projects from head 39 perpendicularly to surface K and facing and over supporting surface P, and is fitted in known manner to a linear actuator 41 to translate, parallel to its axis, between a forward supporting position supporting sheet portion 19, and a withdrawn rest position, in which it extends clear of sheet portion 19 to allow sheet portion 19 to be deposited on conveyor 14 and roller table 16. Supporting pin 40 being retractable, roller table 16 may be replaced by an ordinary belt conveyor.

In a further variation, not shown, supporting pin 40 is fixed with respect to head 39. In which case, the rollers of roller table 16 are so spaced apart as to allow passage of the supporting pin through roller table 16 regardless of the trajectory of head 39.

Head 39 is moved steadily by an actuating device which, as shown in Figure 1, comprises a belt conveyor 42 located on the opposite side of sheet portion 19 to surface K and comprising a straight rigid frame 43; two pulleys 44 - one of which powered by a motor 45 - fitted to the axial ends of frame 43; and a continuous belt 46 looped about pulleys 44 and fitted integrally with head 39. As shown in Figure 1, the top end 43a of frame 43 is hinged to a fixed post 46 of frame 4 to rotate about a fixed hinge axis 47 substantially perpendicular to surface K, while the bottom end 43b is fitted to a known discrete or continuous positioning device - not described in detail and indicated as a whole by 48 - for adjusting the angle B - always other than zero - between frame 43 and supporting surface P, and so adjusting the distance between head 39 and cut-and-part unit 18 as a function of the size and/or shape of sheet portion 19 for rotation.

In the Figure 5 variation, belt conveyor 42 is replaced by a straight guide 50 fitted to frame 4 in exactly the same way as frame 43 and supporting head 39 in axially-sliding manner. Head 39 is movable in opposite directions along guide 50 by a pneumatic or electric actuating assembly 51 shown schematically.

Operation of system 1 will now be described as of the condition in which a work sheet 2 of glass is located at station 10, on conveyor 14 and resting on inclined surface K, supporting pin 40 is positioned clear of the path of sheet 2, so as not to interfere with sheet 2, push head 27 is set to a predetermined height as a function of the vertical dimension of sheet 2, and angle B is also adjusted as a function of the vertical dimension of sheet 2.

As of this condition, sheet 2 is fed to station 12 where it is first cut and parted in known manner to form two side by side sheet portions 19 and 20. At this point, sheet portion 20 is backed up by conveyor 14 to a position close to loading station 10, while sheet portion 19 is rotated while still resting on roller table 16. This is done by first moving supporting head 39 towards unit 18 to position pin 40 close to edge 19a of sheet portion 19, and then operating actuator 28, which first brings push head 27 to rest against edge 19b of sheet portion 19, and then exerts thrust S1 close to the top edge of sheet portion 19 and in a substantially straight direction parallel to surface P to rotate sheet portion 19 anticlockwise about a hinge axis F coincident with supporting surface P and with the corner of sheet portion 19. As soon as sheet portion 19 exceeds a point or position of no return, push head 27 is arrested and withdrawn, while sheet portion 19 continues rotating, resting on pin 40, until it eventually comes to rest on supporting surface P. During rotation, the pin-sheet portion contact area moves along edge 19a of the sheet portion towards the supporting surface, on reaching which, pin 40 is withdrawn beneath supporting surface P through roller table 16 to release sheet portion 19. Once released, the sheet portion is again fed in direction A through unit 18, by which it is cut and parted into two or more articles 3, which are then fed to station 11. Once sheet portion 19 is cut and parted, sheet portion 20 is fed back into station 12, is rested on one edge, and is cut and parted in the same way as sheet portion 19.

Compared with known solutions, system 1 described is therefore extremely compact, especially lengthwise, i.e. in the sheet travelling direction, by the cut-and-part station coinciding with the rotation station. That is, in system 1, both cut-and-part unit 18 and rotation unit 23 are located at the same station.

Besides being extremely straightforward in design, rotation unit 23 in particular also has the major advantage that the sheet portions need not be lifted off the supporting and conveying surface, and, at any rate, the sheet portion for rotation need not be engaged by dedicated actuators rotating together with the sheet portion throughout. Unlike known solutions, in system 1 described, the sheet portion in fact is simply pushed from one side and retained on the opposite side, and rotated directly in contact with the supporting surface, so that no effort is required to lift it or connect it to the rotation unit. The sheet portion is rotated gently and steadily into the rest position by being accompanied at all times by the push head and supporting head, which move steadily by being activated by easily controllable linear actuators, and the positions of which are selected each time as a function of the shape and size as well as the weight of the sheet portion.

As a result, handling of the sheet portions, regardless of shape and/or size, is greatly simplified, and the reliability and safety of the system improved. Moreover, by comprising relatively straightforward construction and control parts, system 1 is extremely cheap to produce and run, and involves no skilled labour.

Clearly, changes may be made to system 1 as described herein without, however, departing from the protective scope as defined in the main Claims. In particular, the push head and supporting head may be controlled by devices other than those described by way of example, just as different members may be provided for conveying the sheets, sheet portions, and articles.

Rotation unit 23 may obviously also be located outside station 12, and actuating means provided to feed the sheet portions from station 12 to unit 23.

System 1 may obviously also be used for cutting and parting ordinary or at least partly coated sheets of glass.

## Claims

1. A method of cutting and parting sheets (2) of glass, the method comprising the operations of feeding a work sheet (2) into a cut-and-part station (12); setting the work sheet (2) in a substantially vertical position on a horizontal supporting surface (P); cutting and parting said work sheet (2) using cutting and parting means (18) at said station (12) to form at least one sheet portion (19) (20) positioned on edge; rotating the sheet portion (19) (20) about a horizontal axis (F) into a rest position, in which the sheet portion rests on one edge on said supporting surface (P); and cutting and parting the sheet portion to form at least one flat article (3); **characterized in that** rotation of said sheet portion about said horizontal axis (F) is performed at said cut-and-part station (12).

2. A method as claimed in Claim 1, **characterized in that** rotation of said sheet portion (19) (20) about said horizontal axis (F) is performed maintaining the sheet portion constantly and directly in contact with said supporting surface (P).

3. A method as claimed in Claim 1 or 2, **characterized in that** rotation of said sheet portion about said horizontal axis is performed by exerting thrust (S1) on a first edge (19a) of said sheet portion located downstream from said cutting and parting means (18), so as to rotate said sheet portion, about said horizontal axis (F), at least past a rotated position of no return, and by accompanying the sheet portion as it is rotated between said position of no return and said rest position.

4. A method as claimed in Claim 3, **characterized in that** said thrust (S1) is exerted by forcing a push head (27) against a portion of said first edge close to a top end of said sheet portion.

5. A method as claimed in Claim 4, **characterized in that** said thrust is exerted by advancing said push head in a substantially straight direction.

6. A method as claimed in Claim 5, **characterized in that** said push head is advanced in a direction substantially parallel to said supporting surface (P).

7. A method as claimed in one of Claims 3 to 6, **characterized in that** said thrust is arrested as soon as said sheet portion passes said position of no return.

8. A method as claimed in any one of Claims 3 to 7, **characterized in that** said sheet portion is accompanied by applying support on a second edge (19b) of said sheet portion opposite the edge on which said thrust is exerted.

9. A method as claimed in Claim 8, **characterized in that** said support is applied on a limited portion of said second edge.

10. A method as claimed in Claim 9, **characterized in that** said support is applied by moving said limited portion along said second edge.

11. A method as claimed in Claim 9 or 10, **characterized in that** said support is applied by resting the second edge on a movable supporting head, and moving the supporting head towards said supporting surface.

12. A method as claimed in Claim 11, **characterized in that** said supporting head is moved in a straight direction forming an angle (B) of other than 90° with said supporting surface.

13. A method as claimed in Claim 11 or 12, **characterized in that** said supporting head is moved steadily.

14. A method as claimed in any one of Claims 11 to 13, **characterized by** comprising the further operation of releasing said sheet portion from said supporting head close to said supporting surface.

15. A method as claimed in Claim 14, **characterized in that** said sheet portion is released by moving said supporting head beneath said supporting surface (P).

16. A method as claimed in one of Claims 11 to 15, **characterized in that** said supporting head comprises a pin member on which said sheet portion rests; and **in that** said sheet portion is released by moving said pin member to the side of said sheet portion.

17. A vertical system (1) for cutting and parting sheets (2) of glass, the system (1) comprising a cut-and-part station (12); a horizontal supporting surface (P) for supporting a work sheet (2) in a substantially vertical or on-edge position at said cut-and-part station (12); cutting and parting means (18) located at said cut-and-part station (12) to form at least one sheet portion (19) (20) positioned on edge on said supporting surface (P); and actuating means (23) for rotating the sheet portion (19) (20) about a horizontal axis (F) into a rest position, in which the sheet portion rests on one edge on said supporting surface (P) and can be cut and parted further to form at least one flat article (3); **characterized in that** said actuating means (23) are housed in said cut-and-part station (12).

18. A system as claimed in Claim 17, **characterized in that** said actuating means (23) comprise push means (24) located downstream from said cutting and parting means (18) to rotate the sheet portion past a rotated position of no return; and accompanying means (25) for accompanying the sheet portion as it is rotated between said position of no return and said rest position.

19. A system as claimed in Claim 18, **characterized in that** said push means (24) comprise a push head (27) facing a first edge (19a) of said sheet portion and adjacent to a top end of the sheet portion.

20. A system as claimed in Claim 18 or 19, **characterized in that** said push means (24) also comprise a linear actuator (28) for moving said push head (27) in a straight direction.

21. A system as claimed in Claim 20, **characterized in that** said straight direction is substantially parallel to said supporting surface (P).

22. A system as claimed in Claim 20 or 21, **characterized in that** said push means also comprise adjusting means (32, 34) for adjusting the distance between said linear actuator (28) and said supporting surface (P).

23. A system as claimed in Claim 20 or 21, **characterized by** comprising two or more linear actuators (28) at different distances from said supporting surface (P); and selection means (37) for selectively activating said linear actuators (28).

24. A system as claimed in one of Claims 18 to 23, **characterized in that** said accompanying means (25) are located upstream from said cutting and parting means (18) in the travelling direction of said sheet.

25. A system as claimed in Claim 24, **characterized in that** said accompanying means (25) comprise a supporting head (39) for supporting said sheet portion; and further actuating means (42, 45; 50, 51) for moving said supporting head (39) to and from said supporting surface (P).

26. A method as claimed in Claim 25, **characterized in that** said further actuating means move said supporting head (39) in opposite senses in a straight direction forming an angle (B) of other than zero with said supporting surface.

27. A system as claimed in Claim 26, **characterized in that** said further actuating means comprise adjusting means (48) for adjusting said angle (B) as a function of the size/shape or weight of said sheet portion.

28. A system as claimed in Claim 26 or 27, **characterized in that** said further actuating means comprise a belt conveyor (42).

29. A system as claimed in any one of Claims 25 to 28, **characterized in that** said supporting head (39) comprises a pin member (40) on which said sheet portion rests; and actuating means (41) for moving said pin member between a supporting position and a rest position, in which said pin member is moved to the side of said sheet portion.
